# EUROPÄISCHE PATENTSCHRIFT

(11) **EP 1 806 205 B1**
(45) Veröffentlichungstag und Bekanntmachung des Hinweises auf die Patenterteilung: **05.11.2008**
(21) Anmeldenummer: 06026135.1
(22) Anmeldetag: 16.12.2006
(51) Int. Cl.: B23P 19/08, F16J 15/32

(54) **Verfahren zur Montage von innenliegenden O-Ringen und Vorrichtung zur Durchführung des Verfahrens**
Method for mounting internal O-rings and device for carrying out the method
Procédé de montage de joints toriques internes et dispositif pour la mise en oeuvre de ce procédé

(30) Priorität: 07.01.2006 DE 102006000967
(43) Veröffentlichungstag der Anmeldung: 11.07.2007
(73) Patentinhaber: FT Automation GmbH & Co. KG, 37308 Heiligenstadt (DE)
(72) Erfinder: Stützer Heinrich, 37308 Bernterode (DE); Koch Stefan, 37115 Duderstadt (DE); Müssig Friedhelm, 37318 Bornhagen (DE)
(74) Vertreter: Albrecht, Rainer Harald

(56) Entgegenhaltungen:
- WO-A1-00/61328
- DE-A1- 3 816 593
- JP-A- 11 033 842
- US-A- 5 138 752
- DATABASE WPI Week 198628 Derwent Publications Ltd., London, GB; AN 1986-181728 XP002427947 & SU 1 196 200 A (YAROSL MOTOR WKS) 7. Dezember 1985 (1985-12-07)

## Beschreibung

Die Erfindung betrifft ein Verfahren zur Montage von innenliegenden O-Ringen. Gegenstand der Erfindung ist ferner eine Vorrichtung zur Durchführung des Verfahrens.

Aus der Druckschrift WO 00/61328 ist ein Montagewerkzeug zur Montage von innenliegenden O- und Stützringpaaren bekannt. Bei der bekannten Vorrichtung werden der O- und der Stützring bereichsweise deformiert und dadurch zusammengezogen, so dass ein berührungsloses Einbringen in das die Ringe aufnehmende Werkstück möglich ist. Zur Deformation der Ringe ist am Montagewerkzeug ein verschiebbarer Haken vorgesehen. Die Positionierung von O-Ring und Stützring am Montagewerkzeug ist in der Druckschrift nicht näher erläutert.

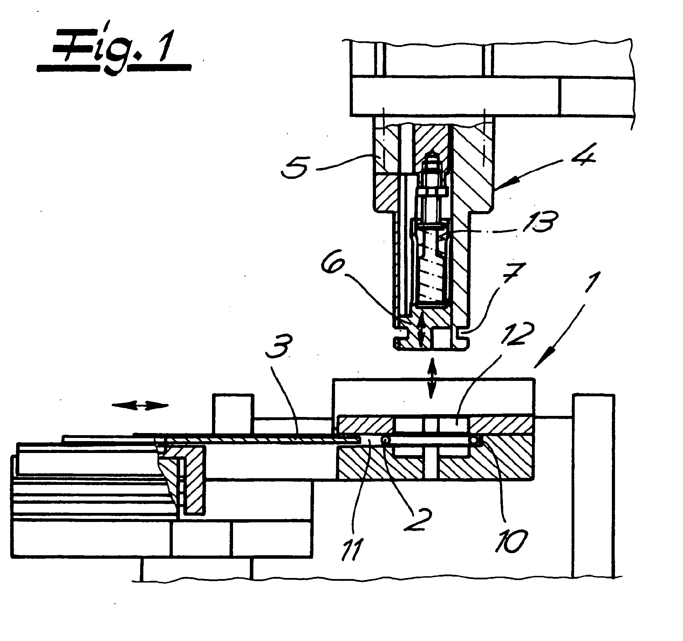

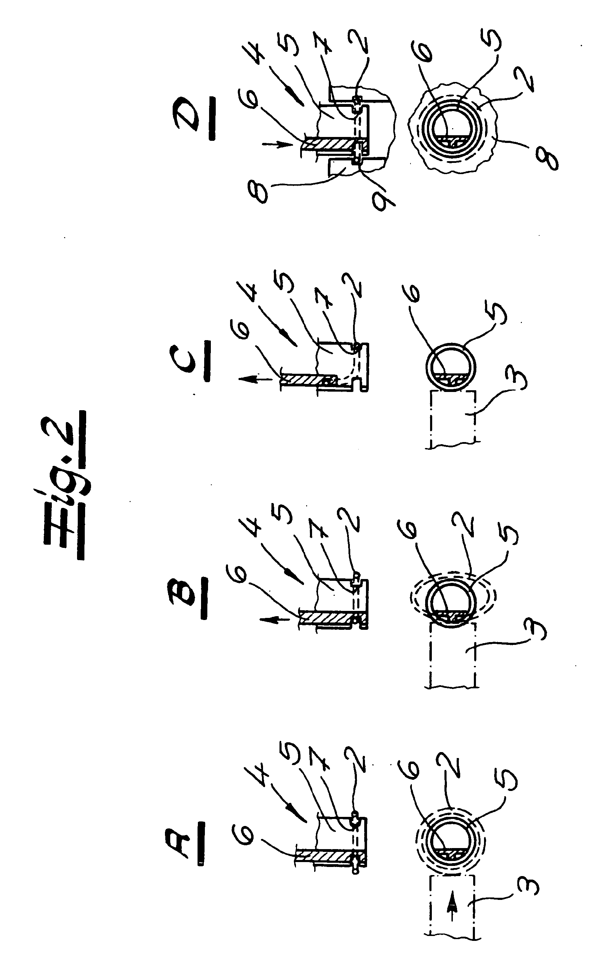

Das Dokument JP-A-11-033842 bildet den nächstliegenden Stand der Technik. Es offenbart ein Verfahren zur Montage von innenliegenden O-Ringen mit folgenden Verfahrensschritten:
**a)** Ein O-Ring wird **auf** eine Aufnahmevorrichtung positioniert, (vgl. Abbildung 5a)
**b)** eine Montagevorrichtung mit einem massiven zylindrischen Element und einer, innerhalb einer axialen, an der Außenfläche des massiven zylindrischen Elementes angeordneten Nut, axial verschiebbaren Zugstange wird so in die Aufnahmevorrichtung hinein gefahren, dass eine von dem zylindrischen Element und der Zugstange in ihrer Ausgangsposition gebildete umlaufende Außennut zur Aufnahme des O-Ringes sich innerhalb desselben befindet, (vgl. Abbildung 5b)
**c)** mit Hilfe eines Schiebers wird der O-Ring an den von der Zugstange gebildeten Nutgrund angedrückt, (vgl. Abbildung 5c)
**d)** die Zugstange wird gegenüber ihrer Ausgangsposition so weit axial verschoben, dass der hierdurch verformte O-Ring mit seiner Innenseite an der Oberfläche von zylindrischen Element und Zugstange fest anliegt und hierbei in den von dem zylindrischen Element gebildeten Nutgrund eingreift, (*vgl. Abbildungen 5d und 5e*)
**e)** die Montagevorrichtung wird so in ein Werkstück mit einer für den O-Ring vorgesehenen Innennut eingeschoben, dass die von dem zylindrischen Element gebildete Außennut und die Innennut fluchten,
**f)** die Zugstange wird wieder in ihre Ausgangsposition zurück verschoben, so dass sich der O-Ring an den Nutgrund der Innennut anlegt (*vgl. Abbildungen 1 und 2*)*.*

Der Erfindung liegt die Aufgabe zugrunde, ein einfaches Verfahren zur Montage von innenliegenden O-Ringen anzugeben.

Die Aufgabe wird erfindungsgemäß gelöst durch ein Verfahren zur Montage von innenliegenden O-Ringen mit folgenden Verfahrensschritten:
a) Ein O-Ring wird mittels eines automatisch betriebenen Schiebers in eine Aufnahmevorrichtung eingeschoben,
b) eine Montagevorrichtung mit einer Hülse und einer innerhalb der Hülse axial verschiebbaren Zugstange wird so in die Aufnahmevorrichtung hinein gefahren, dass eine von der Hülse und der Zugstange in ihrer Ausgangsposition gebildete umlaufende Außennut zur Aufnahme des O-Ringes sich innerhalb desselben befindet,
c) mit Hilfe des Schiebers wird der O-Ring an den von der Zugstange gebildeten Nutgrund angedrückt,
d) die Zugstange wird gegenüber ihrer Ausgangsposition innerhalb der Hülse so weit axial verschoben, dass der hierdurch verformte O-Ring mit seiner Innenseite an der Oberfläche von Hülse und Zugstange fest anliegt und hierbei in den von der Hülse gebildeten Nutgrund eingreift,
e) die Montagevorrichtung wird so in ein Werkstück mit einer für den O-Ring vorgesehenen Innennut eingeschoben, dass die von der Hülse gebildete Außennut und die Innennut fluchten,
f) die Zugstange wird wieder in ihre Ausgangsposition zurück verschoben, so dass sich der O-Ring an den Nutgrund der Innennut anlegt.

Nach Beendigung des letztgenannten Verfahrensschrittes wird die Montagevorrichtung wieder aus dem Werkstück herausgefahren. Das erfindungsgemäße Verfahren zeichnet sich einerseits dadurch aus, dass der Schieber eine automatische Positionierung des O-Rings in der Montagevorrichtung erlaubt. Zunächst wird mit Hilfe des Schiebers der O-Ring in die Aufnahmevorrichtung eingebracht. Zusätzlich wird der Schieber erfindungsgemäß dazu verwendet, den O-Ring gezielt an den von der Zugstange gebildeten Nutgrund zu drücken. Hierdurch wird ein Abrutschen des O-Ringes von der Zugstange während deren Verfahrbewegung sicher vermieden.

Zweckmäßigerweise wird der Schieber durch einen Elektromotor angetrieben, wobei als Elektromotor vorzugsweise ein Linearantrieb verwendet wird. Die Durchführung der beiden Arbeitsschritte "Zuführen" bzw. "Andrücken des O-Ringes" erfolgt dann über eine entsprechende Ansteuerung des Elektromotors. Die Aufnahmevorrichtung kann einen Zuführschlitz aufweisen, durch den der O-Ring mittels des Schiebers eingeschoben wird. Zweckmäßigerweise liegt der O-Ring nach dem Einschieben an seiner dem Schieber abgewandten Seite an einem Absatz an der Aufnahmevorrichtung an. Der Absatz gewährt eine exakte Positionierung des O-Ringes der Montagevorrichtung. Zweckmäßigerweise wird der Schieber durch den Zuführschlitz geführt. Gemäß einer weiteren vorteilhaften Ausgestaltung der Erfindung werden/wird die Montagevorrichtung und/oder die Zugstange ebenfalls automatisch angetrieben. Hierdurch wird ein vollautomatisierter Montagevorgang gewährleistet.

Gegenstand der Erfindung ist ferner eine Vorrichtung zur Montage von innenliegenden O-Ringen gemäß Anspruch 7. Bevorzugte Ausführungsformen dieser Vorrichtung sind in den Ansprüchen 8 und 9 beschrieben.

Im Folgenden wird die Erfindung anhand einer lediglich ein Ausführungsbeispiel darstellenden Zeichnung ausführlich erläutert: Es zeigen schematisch:
- Fig. 1: eine Seitenansicht einer erfindungsgemäßen Vorrichtung zur Montage von innenliegenden O-Ringen in teilweise aufgebrochener Darstellung und
- Fig. 2: eine prinzipielle Darstellung eines erfindungsgemäßen Montagevorganges.

Die in Fig. 1 dargestellte Vorrichtung weist eine Aufnahmevorrichtung 1 für einen O-Ring 2 sowie einen Schieber 3 mit automatischem, nicht näher dargestelltem Antrieb zum Zuführen des O-Ringes 2 in die Aufnahmevorrichtung 1 auf. Der vorgeschaltete Transport des O-Ringes 2 hin zum Schieber 3 erfolgt über eine übliche, nicht dargestellte, Transportvorrichtung. Ferner ist eine quer zum Schieber 3 bewegbare Montagevorrichtung 4 mit einer Hülse 5 und einer innerhalb der Hülse 5 axial verschiebbar angeordneten Zugstange 6 vorgesehen. Die Montagevorrichtung 4 kann zur Aufnahme des O-Ringes 2 so in die Aufnahmevorrichtung 1 eingefahren werden, dass eine von der Hülse 5 und der Zugstange 6 in ihrer Ausgangsposition gebildete umlaufende Außennut 7 sich innerhalb des O-Ringes 2 befindet (Fig. 2, Zustand A). Der Schieber 3 ist der Zugstange 6 zugewandt angeordnet, so dass mit Hilfe des Schiebers 3 der O-Ring 2 verformt und an den von der Zugstange 6 gebildeten Nutgrund angedrückt werden kann (Fig. 2, Zustand B). Danach wird die Zugstange 6 gegenüber ihrer Ausgangsposition innerhalb der Hülse 5 so weit axial verschoben, dass der hierdurch verformte O-Ring 2 mit seiner gesamten Innenseite an der Oberfläche von Hülse 5 und Zugstange 6 fest anliegt und hierbei in den von der Hülse 5 gebildeten Nutgrund eingreift (Fig. 2, Zustand C). Die Montagevorrichtung 4 wird danach berührungslos so in ein Werkstück 8 mit einer für den O-Ring 2 vorgesehenen Innennut 9 eingeschoben, dass die von der Hülse 5 gebildete Außennut 7 und die Innennut 9 fluchten. Die Zugstange 6 wird anschließend wieder in ihre Ausgangsposition zurück verschoben, so dass sich der O-Ring 2 an dem Nutgrund der Innennut 9 anlegt (Fig. 2, Zustand D). Abschließend wird die Montagevorrichtung 4 wieder aus dem Werkstück 8 herausgefahren und der Montagevorgang ist beendet.

Der nicht näher dargestellte automatische Antrieb ist als Elektromotor ausgebildet, wobei als Elektromotor ein Linearantrieb verwendet wird. Hierdurch kann das zu Beginn des Montagevorganges durchzuführende Einschieben des O-Ringes 2 in die Aufnahmevorrichtung 1 (Arbeitsschritt vor Fig. 2 A) und das anschließende Andrücken des O-Ringes 2 an den von der Zugstange 6 gebildeten Nutgrund (Fig. 2, Zustand B) bei entsprechender Ansteuerung des Elektromotors voll automatisiert durchgeführt werden. Aus Fig. 1 ist ersichtlich, dass die Aufnahmevorrichtung 1 einen Absatz 10 und einen Zuführschlitz 11 aufweist, durch den der O-Ring 2 mittels des Schiebers 3 eingeschoben wird. Nach dem Einschieben liegt der O-Ring 2 an seiner dem Schieber 3 abgewandten Seite an dem Absatz 10 an. Ferner ist erkennbar, dass der Schieber 3 durch den Zuführschlitz 11 geführt wird. Die Montagevorrichtung 4 und die Zugstange 6 verfügen ebenfalls über einen automatischen Antrieb (nicht näher dargestellt), vorzugsweise wiederum Elektromotoren. Die Aufnahmevorrichtung 1 weist eine Aussparung 12 für das der Außennut 7 zugewandte Hülsen- und Zugstangenende auf. An die Zugstange 6 ist ferner eine Rückstellfeder 13 angeschlossen, welche die Zugstange 6 selbsttätig in ihre Ausgangsposition zurückbewegt.

## Patentansprüche

1. Verfahren zur Montage von innenliegenden O-Ringen (2) mit folgenden Verfahrensschritten:
a) Ein O-Ring (2) wird mittels eines automatisch betriebenen Schiebers (3) in eine Aufnahmevorrichtung (1) eingeschoben,
b) eine Montagevorrichtung (4) mit einer Hülse (5) und einer innerhalb der Hülse axial verschiebbaren Zugstange (6) wird so in die Aufnahmevorrichtung (1) hinein gefahren, dass eine von der Hülse (5) und der Zugstange (6) in ihrer Ausgangsposition gebildete umlaufende Außennut (7) zur Aufnahme des O-Ringes (2) sich innerhalb desselben befindet,
c) mit Hilfe des Schiebers (3) wird der O-Ring (2) an den von der Zugstange (6) gebildeten Nutgrund angedrückt,
d) die Zugstange (1) wird gegenüber ihrer Ausgangsposition innerhalb der Hülse (5) so weit axial verschoben, dass der hierdurch verformte O-Ring (2) mit seiner Innenseite an der Oberfläche von Hülse (5) und Zugstange (6) fest anliegt und hierbei in den von der Hülse (5) gebildeten Nutgrund eingreift,
e) die Montagevorrichtung wird so in ein Werkstück (8) mit einer für den O-Ring (2) vorgesehenen Innennut (9) eingeschoben, dass die von der Hülse (5) gebildete Außennut und die Innennut fluchten,
f) die Zugstange (6) wird wieder in ihre Ausgangsposition zurück verschoben, so dass sich der O-Ring (2) an den Nutgrund der Innennut (9) anlegt.

2. Verfahren nach Anspruch 1, **dadurch gekennzeichnet, dass** der Schieber (3) durch einen Elektromotor angetrieben wird.

3. Verfahren nach Anspruch 2, **dadurch gekennzeichnet, dass** als Elektromotor ein Linearantrieb verwendet wird.

4. Verfahren nach einem der Ansprüche 1 bis 3, **dadurch gekennzeichnet, dass** die Aufnahmevorrichtung einen Absatz und einen Zuführschlitz (11) aufweist, durch den der O-Ring (2) eingeschoben wird, wobei der O-Ring nach dem Einschieben an seiner dem Schieber abgewandten Seite an dem Absatz anliegt.

5. Verfahren nach Anspruch 4, **dadurch gekennzeichnet, dass** der Schieber (3) durch den Zuführschlitz (11) geführt wird.

6. Verfahren nach einem der Ansprüche 1 bis 5, **dadurch gekennzeichnet, dass** die Montagevorrichtung (4) und/oder die Zugstange (6) ebenfalls automatisch angetrieben werden/wird.

7. Vorrichtung zur Montage von innenliegenden O-Ringen mit
einer Aufnahmevorrichtung (1) für einen O-Ring (2),
einem Schieber (3) mit automatischem Antrieb zum Zuführen des 0-Rings (2) in die Aufnahmevorrichtung (1),
einer quer zum Schieber (3) bewegbaren Montagevorrichtung (4) mit einer Hülse (5) und einer innerhalb der Hülse (5) axial verschiebbar angeordneten Zugstange (6),
wobei die Montagevorrichtung (4) zur Aufnahme des O-Ringes (2) so in die Aufnahmevorrichtung (1) einfahrbar ist, dass eine von der Hülse (5) und der Zugstange (6) in ihrer Ausgangsposition gebildete umlaufende Außennut (7) sich innerhalb des O-Ringes (2) befindet, und
wobei der Schieber (3) der Zugstange (6) zugewandt angeordnet ist, so dass mit Hilfe des Schiebers (3) der O-Ring (2) an den von der Zugstange (6) gebildeten Nutgrund andrückbar ist.

8. Vorrichtung nach Anspruch 7, **dadurch gekennzeichnet, dass** die Aufnahmevorrichtung (1) eine Aussparung (12) für das der Außennut (7) zugewandte Hülsen- und Zugstangenende aufweist.

9. Vorrichtung nach Anspruch 7 oder 8, **dadurch gekennzeichnet, dass** an die Zugstange (6) eine Rückstellfeder (13) angeschlossen ist, die die Zugstange (6) selbsttätig in ihre Ausgangsposition zurückbewegt.

## Claims

1. Method for mounting internal O-rings (2) with the following method steps:
a) an O-ring (2) is pushed into a receiving device (1) by means of an automatically operated slider (3),
b) a mounting device (4) with a sleeve (5) and a pulling rod (6), which can be displaced axially within the sleeve, is driven into the receiving device (1) in such a manner that a circumferential outer groove (7) for receiving the O-ring (2), which groove is formed by the sleeve (5) and the pulling rod (6) in their starting position, is situated within the said O-ring,
c) the O-ring (2) is pressed against the bottom of the groove formed by the pulling rod (6) with the aid of the slider (3),
d) the pulling rod (6) is axially displaced within the sleeve (5) to such an extent with respect to its starting position that the O-ring (2) deformed thereby bears firmly with its inner side against the surface of the sleeve (5) and the pulling rod (6) and in the process engages in the bottom of the groove formed by the sleeve (5),
e) the mounting device is pushed into a workpiece (8) with an inner groove (9), which is provided for the O-ring (2) in such a manner that the outer groove formed by the sleeve (5) and the inner groove are aligned,
f) the pulling rod (6) is displaced back to its starting position so that the O-ring (2) bears against the bottom of the inner groove (9).

2. Method according to Claim 1, **characterised in that** the slider (3) is driven by an electric motor.

3. Method according to Claim 2, **characterised in that** a linear drive is used as the electric motor.

4. Method according to one of Claims 1 to 3, **characterised in that** the receiving device has a recess and a feed slot (11), through which the O-ring (2) is pushed, with the O-ring bearing against the recess on its side facing away from the slider after the O-ring has been pushed in.

5. Method according to Claim 4, **characterised in that** the slider (3) is guided through the feed slot (11).

6. Method according to one of Claims 1 to 5, **characterised in that** the mounting device (4) and/or the pushing rod (6) is/are likewise automatically driven.

7. Device for mounting internal O-rings with
a receiving device (1) for an O-ring (2),
a slider (3) with an automatic drive for guiding the O-ring (2) into the receiving device (1),
a mounting device (4), which can be moved transversely with respect to the slider (3), with a sleeve (5) and a pulling rod (6) which is arranged in an axially displaceable manner within the sleeve (5),
wherein the mounting device (4) for receiving the O-ring (2) can be driven into the receiving device (1) in such a manner that a circumferential outer groove (7), which is formed by the sleeve (5) and the pulling rod (6) in their starting position, is situated within the O-ring (2), and
wherein the slider (3) is arranged facing the pulling rod (6) so that the O-ring (2) can be pressed against the bottom of the groove formed by the pulling rod (6) with the aid of the slider (3).

8. Device according to Claim 7, **characterised in that** the receiving device (1) has a cutout (12) for the sleeve and pulling rod end which faces the outer groove (7).

9. Device according to Claim 7 or 8, **characterised in that** a return spring (13) is connected to the pulling rod (6), which return spring automatically moves the pulling rod (6) back to its starting position.

## Revendications

1. Procédé pour le montage de joints toriques intérieurs (2), comprenant les étapes de procédé suivantes :
a) un joint torique (2) est inséré dans un dispositif d'admission (1) au moyen d'un poussoir (3) actionné de façon automatique.
b) un dispositif de montage (4), avec une douille (5) et une barre de traction (6) déplaçable axialement à l'intérieur de la douille, est introduit de telle manière dans le dispositif d'admission (1), qu'une rainure extérieure (7) périphérique, formée par la douille (5) et la barre de traction (6) dans sa position initiale, se trouve à l'intérieur du joint torique (2) pour l'admission de celui-ci,
c) le joint torique (2) est pressé à l'aide du poussoir (3) contre le fond de rainure formé par la barre de traction (6),
d) la barre de traction (6) est déplacée axialement par rapport à sa position initiale à l'intérieur de la douille (5), jusqu'à ce que le joint torique (2) ainsi déformé s'applique fermement avec sa face intérieure contre la surface de la douille (5) et de la barre de traction (6), tout en s'engageant ainsi dans le fond de rainure formé par la douille (5),
e) le dispositif de montage est inséré de telle manière dans une pièce usinée (8) avec une rainure intérieure (9) prévue pour le joint torique (2), que la rainure extérieure formée par la douille (5) est alignée avec la rainure intérieure,
f) la barre de traction (6) est à nouveau déplacée dans sa position initiale, de telle façon que le joint torique (2) s'applique sur le fond de rainure de la rainure intérieure (9).

2. Procédé selon la revendication 1, **caractérisé en ce que** le poussoir (3) est entraîné par un moteur électrique.

3. Procédé selon la revendication 2, **caractérisé en ce qu'**un entraînement linéaire est utilisé en tant que moteur électrique.

4. Procédé selon l'une des revendications 1 à 3, **caractérisé en ce que** le dispositif d'admission comporte un gradin et une fente d'alimentation (11), par laquelle le joint torique (2) est inséré, le joint torique s'appliquant avec sa face détournée du poussoir contre le gradin après l'insertion.

5. Procédé selon la revendication 4, **caractérisé en ce que** le poussoir (3) est guidé à travers la fente d'alimentation (11).

6. Procédé selon l'une des revendications 1 à 5, **caractérisé en ce que** le dispositif de montage (4) et/ou la barre de traction (6) sont également entraînés de façon automatique.

7. Dispositif pour le montage de joints toriques intérieurs, avec
un dispositif d'admission (1) pour un joint torique (2),
un poussoir (3) avec un entraînement automatique pour l'insertion du joint torique (2) dans le dispositif d'admission (1),
un dispositif de montage (4) déplaçable perpendiculairement au poussoir (3), avec une douille (5) et une barre de traction (6) déplaçable axialement à l'intérieur de la douille (5),
le dispositif de montage (4) pour l'admission du joint torique (2) peut être introduit de telle manière dans le dispositif d'admission (1), qu'une rainure extérieure (7) périphérique, formée par la douille (5) et la barre de traction (6) dans sa position initiale, se trouve à l'intérieur du joint torique (2), et
le poussoir (3) de la barre de traction (6) est disposé à proximité, de telle façon que le joint torique (2) peut être pressé à l'aide du poussoir (3) contre le fond de rainure formé par la barre de traction (6).

8. Dispositif selon la revendication 7, **caractérisé en ce que** le dispositif d'admission (1) comporte un évidement (12) pour l'extrémité de la douille ou de la barre de traction qui est tournée vers la rainure extérieure (7).

9. Dispositif selon la revendication 7 ou 8, **caractérisé en ce qu'**un ressort de rappel (13) est relié à la barre de traction (6), permettant de faire revenir automatiquement la barre de traction (6) dans sa position initiale.
